# EUROPEAN PATENT APPLICATION

(11) **EP 1 544 612 A1**
(43) Date of publication of application: **22.06.2005**
(21) Application number: 03028082.0
(22) Date of filing: 09.12.2003
(51) Int. Cl.: G01N 30/82

(54) **Chromatography system and method for operating the same**

(71) Applicant: Agilent Technologies, Inc., Palo Alto, CA 94306 (US)
(72) Inventor: Hoffmann, Bernd, Hewlett-Packard-Strasse8 76337 Waldbronn (DE)
(74) Representative: Barth, Daniel

(57) **Abstract**

The invention discloses a chromatographic system (1) including a stationary phase (5), a mobile phase flow line (10), a detector (15), a mobile phase supply system (20), an injection device (12) and a mobile phase switch (25), which furthermore includes a controlling system (30) in data communication with the detector (15) and the mobile phase supply system (20), wherein the controlling system (30) can automatically direct the flow of the mobile phase via the mobile phase switch (25) into different containers (26A, 26B, 27) depending on the data received by the detector (15) and the mobile phase supply system (20).

## Description

### BACKGROUND OF THE INVENTION

The present invention relates to an automated chromatographic system and an automated method of operating the chromatographic system.

Liquid chromatography, for example high performance liquid chromatography (HPLC) is a widespread separation technique, wherein a mixture of different components to be analyzed is dissolved in a liquid mobile phase. The mobile phase is applied on a stationary phase, normally a column, where the different components can interact in a different way with the stationary phase therefore eluting from the column at different times, (when a solvent is used). Often a gradient elution, including a mobile phase gradient wherein the composition of the mobile phase is changed over time, has to be run in order to elute the different components from the column. The separated components of interest, often called analytes, leaving the stationary phase are normally detected using a suitable detector, for example an UV or mass spectrometer (MS) detector. The representation of the detector signal as a function of time is called chromatogram. The chromatogram shows so-called (signal) peaks, which represent different components.

In preparative HPLC the operation of a chromatographic system normally requires a lot of user input. This especially accounts for the direction of flow of the mobile phase after having passed the column. A mobile phase containing components of interest (analytes) might be directed into a fraction collector for further analysis. Mobile phases containing constituents of no further interest might be drained into waste, whereas mobile phases with exactly the same composition as at the beginning might be directed back into their original container for recycling purposes. A mobile phase switch, for example a valve, normally directs the flow of the mobile phase. The position of this valve has to be changed depending on the composition of the mobile phase in order to direct the flow of the mobile phase into the different containers mentioned above.

The Japanese patent application publication JP 10197506 A discloses a chromatographic system with solvent recycling abilities. A solvent recycling system including a microcomputer with a level setting section is part of the detector. When the signal of the detector exceeds a certain threshold level, i. e. a (signal) peak is detected; the valve is changed so that the mobile phase is directed into a specified collection vessel or into waste.

When the signal does not exceed the threshold level the solvent is believed to have the original composition of the solvent applied onto the stationary phase and is therefore redirected into the original reservoir of the original phase for recycling purposes.

Therefore it is not possible to automatically run this chromatographic system under different chromatographic modes rather than the isocratic mode. Furthermore this system does not reflect any impurities occurring during the chromatographic process, such as wear of mechanically permanent moved parts and it does not allow an automatic chromatographic procedure, wherein the mobile phase is automatically directed into waste, into the original container or into a fraction collector, depending on its composition and the presence or absence of analytes in the mobile phase.

### SUMMARY OF THE INVENTION

Therefore there is a need for a chromatographic system, which allows an automated chromatographic procedure. The present invention meets these needs by providing a chromatographic system according to the base claim Favorable embodiments of the chromatographic system and a method for operating the chromatographic system are subjects of further claims.

The main subject of the invention according to the base claim is a chromatographic system comprising:
- a stationary phase,
- a mobile phase flow line providing a flow path for a mobile phase,
- a detector capable of detecting the composition of a mobile phase passed through the stationary phase and able to detect the presence of components eluted from the stationary phase,
- a mobile phase supply system for delivering the mobile phase to the mobile phase flow line,
- a mobile phase switch adapted to direct the flow of the mobile phase to different locations,
- the mobile phase supply system, the stationary phase, the detector and the mobile phase switch being connected via the mobile phase line, wherein the detector and the mobile phase switch are located downwards in the direction of flow relative to the stationary phase,
- a controlling system in data communication with the detector and the mobile phase supply system being adapted to control the mobile phase supply system and the mobile phase switch,
- wherein the controlling system is adapted to control the mobile phase switch according to data received from the detector and the mobile phase system.

In order to operate the chromatographic system of the invention a stationary phase can be filled into a container or alternatively an already pre-packed stationary phase in an HPLC column might be provided and connected to the other components of the system via the mobile phase flow line. Furthermore a mobile phase, immiscible with the stationary phase, performing a distribution equilibrium of analytes of interest between mobile and stationary phase might be provided.

In the chromatographic system of the invention the controlling system receives data from the detector (e.g. information about composition changes of the mobile phase and the presence of components eluted from the stationary phase e.g. analytes of interest or impurities and data from the mobile phase supply system (e.g. information about the mobile phase flow rate and the composition of the mobile phase applied onto the stationary phase). After processing these data, the controlling system can direct the flow of the mobile phase passed through the stationary phase into different locations depending on the data. Since the controlling system is adapted to control the mobile phase switch, it can automatically direct the flow of the mobile phase into different locations, depending on the composition of the mobile phase and the presence of components eluted from the stationary phase. Therefore, minimal user input is required for the chromatographic system of the invention.

Advantageously the mobile phase supply system includes a pump that is controlled by the controlling system.

In another embodiment of the chromatographic system of the invention, the mobile phase switch comprises a valve. Depending on the number of desired flow directions, the valves might include a plurality of ports with openings in the valve for different ways. Therefore, the valve might comprise a magnitude of openings, called ports, directing the flow into different locations. Typical valves include six ports or even ten-ports.

In a further embodiment of the chromatographic system the valve might include flow passages and port openings that might differ in their geometrical dimensions to address specific physical demands of the flow system.

Advantageously the detector and the mobile phase supply system include microprocessors for communication with the controlling system. The microprocessors might process data recorded at the mobile phase system or the detector in order to ease the processing of these data within the controlling system.

Preferably the mobile phase flow line comprises at least one of the following components:
- tubes, capillaries and sample injector.

Tubes and capillaries for high performance liquid chromatographic systems (HPLC systems) are especially designed and manufactured to fulfill their different individual chromatographic needs. The tubes and capillaries can be identical or different in length and inner diameter.

In another preferred embodiment of the chromatographic system of the invention, the chromatographic system exhibits a mobile phase recycling ability,
- wherein the detector comprises a diode - array based UV detector capable of storing spectra of the mobile phase and components eluted from the stationary phase,
- wherein at least one storage container for the mobile phase is connected to the mobile phase flow line,
- wherein the controlling system is adapted to redirect the flow of the mobile phase eluted from the stationary phase into this storage container.

A diode array based UV detector (DAD) can measure the total spectrum of the mobile phase composition passed through a stationary phase and the spectrum of components eluted from the stationary phase at any time during a run, therefore allowing the monitoring of the mobile phase and any components in the mobile phase resulting of different origin rather than the mobile phase. For example the diode array based UV detector might be able to simultaneously monitor the spectra of the components eluted at wavelengths of e. g. 254nm, 210nm and 260nm/280nm. These three different, individually defined wavelengths allow the detection of aromatic compounds (254nm) of peptides (21 0nm) and other substances like e.g. nucleic acids (260nm/280nm) at the same time. The composition of the mobile phase might typically be monitored over the entire spectral range, starting from 190nm or 200nm depending on the optical quality of the detector. Once the controlling system has determined, that the composition of the mobile phase passing the stationary phase shows exactly or nearly the same spectrum (e.g. UV spectrum) as the initial mobile phase composition that was applied onto the stationary phase, this mobile phase can easily be redirected back into the original storage container for recycling.

This is possible, because a direct flow line connection between the mobile phase switch and the storage container is part of the system. In the case, that the presence of components eluted from the stationary phase is monitored by the detector, the mobile phase containing such components might be directed into waste if the components are impurities or might be directed to a fraction collector for further analysis if the components are analytes of interest.

Advantageously the controlling system is adapted to combine data of the composition of a mobile phase before entering the stationary phase with those data that have been detected after the mobile phase composition has just passed the detector. The data are preferably received from the detector and the mobile phase supply system.

The combination of both data, the composition of the eluent flow with/without injected samples allows an easy further processing of all the data from the detector and the mobile phase supply system within the controlling system.

Preferably the mobile phase supply system provides data about the mobile phase flow rate and composition per time unit and the detector provides at least one or a combination of the following data:
- change in refractive index, UV absorption, fluorescence intensity, m/z ratio in mass spectroscopy, light scattering intensity for determination of the composition of the mobile phase and the presence of components eluted from the stationary phase at a specific time during a run.

In the case, that analyte destroying detectors are used, e. g. mass spectrometers for the determination of the m/z ratio of analytes, a flow-splitter might advantageously be provided. This flow-splitter divides the mobile phase flow line into two separate flow lines, one first flow line for the majority of the mobile phase leading to the mobile phase switch and another second flow line for a small fraction of the mobile phase leading to the analyte destroying detector for analysis. In this case the small fraction of the mobile phase in the second flow line is analyzed and the mobile phase switch connected to the first flow line can subsequently be controlled according to the information received from the analysis and/or the mobile phase supply system.

It is also possible that the detector comprises different types of spectrometers, for example an UV spectrometer and an refractive index (RI) detector in order to allow an easier determination of the composition of the mobile phase by using and combining different detection methods.

Preferably the mobile phase flow rate generated by the mobile phase supply system is variably adjustable by the controlling system according to data received from the detector. For example this allows an easy adaptation of the mobile phase flow rate and composition of the mobile phase which will pass through the stationary phase according to the composition of the mobile phase that has been leaving the stationary phase and is monitored by the detector.

Therefore the chromatographic system is adapted, for example, to enhance the flow rate and/or its mobile phase composition once a certain event has taken place (e.g. the substance of interest has been eluted from the stationary phase and has been detected in the detector).

Thus, an enhanced mobile phase flow rate might accelerate the equilibration of the stationary phase with a new mobile phase composition for the following chromatographic run in order to reduce the overhead time, necessary to bring back the total system to the starting conditions.

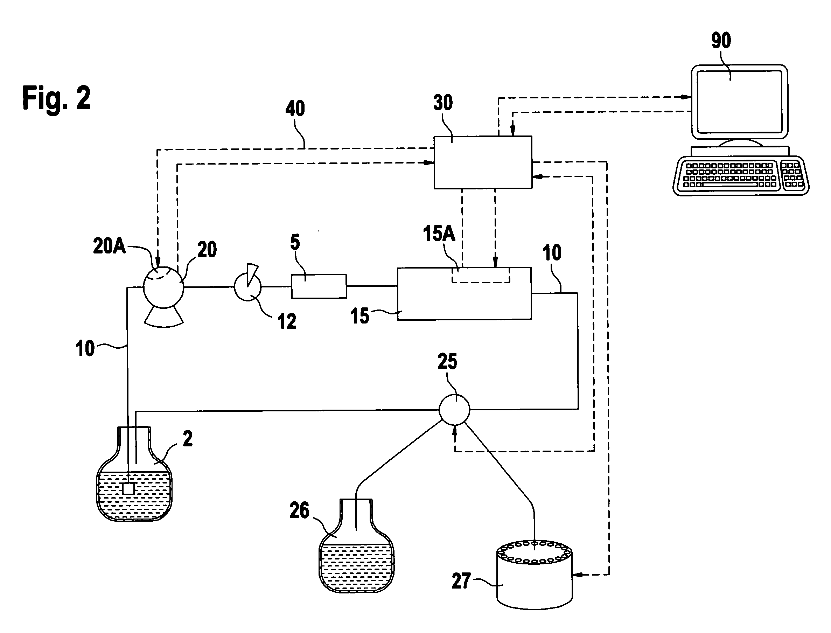

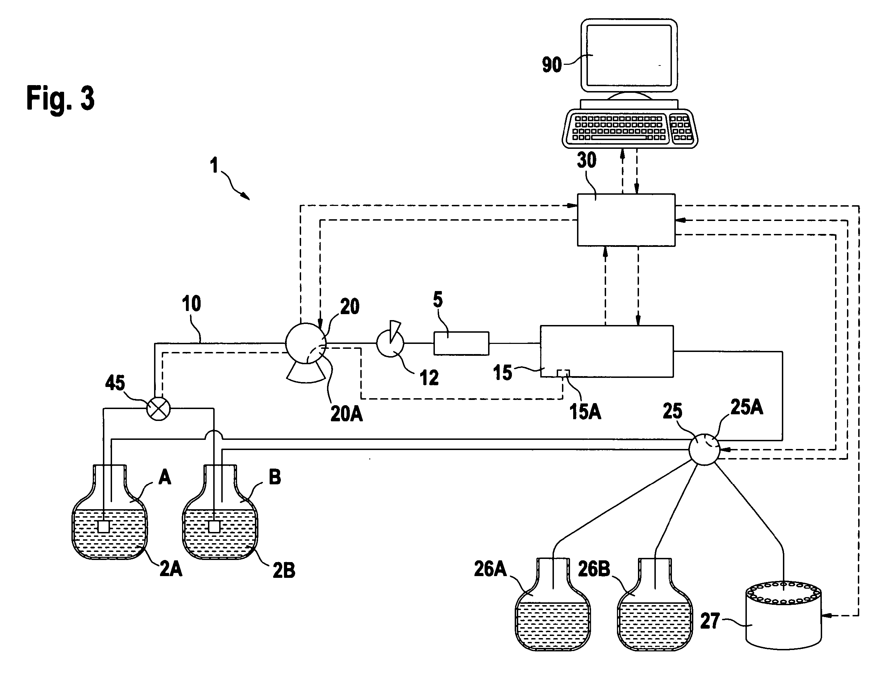

Advantageously the controlling system comprises a computer system connected to the controlling system to process and analyze the data received from the detector and the mobile phase supply system. The computer system preferably is adapted to control the mobile phase switch, the valve and the mobile phase supply system. The computer system might comprise a stationary system like a desktop computer or a handheld control system allowing manual inputs by the user and the monitoring of the chromatographic run (see for example Figures 2 and 3).

Furthermore, the mobile phase switch can comprise a second detector for a test compound,
- wherein the mobile phase switch provides data about the test compound to the controlling system.

The second detector for the test compound might comprise a photo-diode for detection of a dye. For example, a blue emitting dye might be detected by using a red laser photo-diode built into the mobile phase switch, e. g. the valve. The dye can serve as a test compound, which enables the controlling system to determine the delay volume between the UV detector and the mobile phase switch.

In this case the controlling system receives data from the detection system about when the test compound, the dye, was detected in the detector and when the dye was detected at the mobile phase switch. This special embodiment of the chromatographic system of the invention allows a very precise determination of the delay time and thus the delay volume between the detector and the mobile phase switch. A detection system allowing the determination of the delay time is also disclosed in the US patent US 6,106,710, which is hereby incorporated in its entirety.

In other cases, where an exact determination of the dead volume is not necessary, the controlling system simply might determine the dead volume between the mobile phase supply system and the mobile phase switch by using data about the mobile phase flow rate and the volume available for the mobile phase between the mobile phase supply system and the mobile phase switch. A detection system for a test compound in the mobile phase switch is, for example, shown in Figure 3.

In another advantageous embodiment of the chromatographic system of the invention, a mobile phase mixer is part of the system. The mobile phase mixer might be able to generate a mobile phase gradient by actively bringing at least two different initial eluents together and mixing them as for example shown in Figure 3. In this case the controlling system is capable of controlling the mobile phase mixer, thereby enabling the mixing of at least two different initial eluents resulting in a mobile phase to be applied onto the stationary phase.

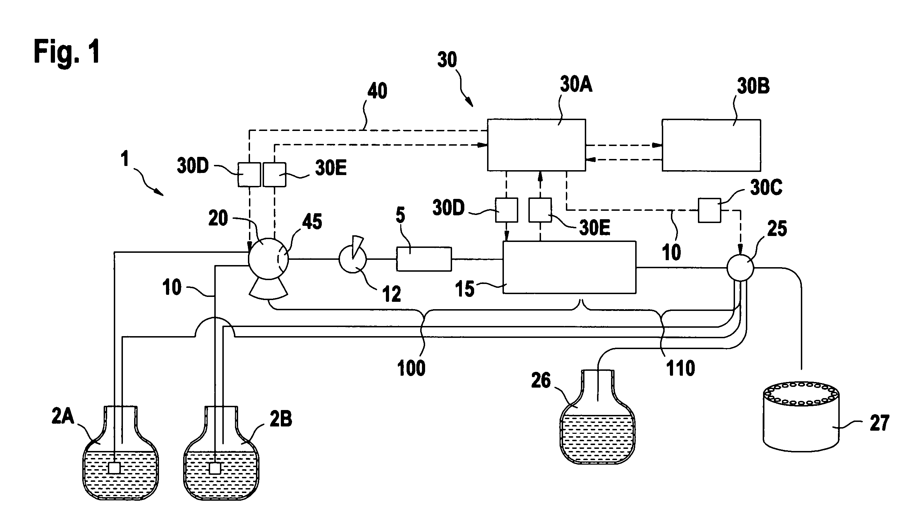

In another embodiment of the chromatographic system of the invention, the mobile phase supply system might be able to combine two different initial eluents to a mobile phase. In this case the mobile phase mixer might be a part of the mobile phase supply system as shown in Figure 1. The mobile phase mixer can then actively (e.g. by using a stirrer blade) or passively (e. g. using beads) mix the already combined initial eluents ensuring a complete mixing.

Using the different mobile phase mixers and mobile phase supply systems, mobile phases of different composition can be generated in order to run gradients with linear and/or non linear mobile phase compositions. Typically two different eluents are mixed together to form the mobile phase of interest. Normally they are of different composition, differing in at least one component of the eluent. The two different eluents might e.g. be acetonitrile and water. The two different eluents might also comprise the same solvents, but differ in the concentration of a salt.

A gradient mixer, which typically is controlled by the mobile phase pump or the controlling system allows more complex chromatographic procedures, for the separation of substances when using a mobile phase gradient.

In a chromatographic system of the invention, which is able to run a gradient elution,
- the controlling system is preferably adapted to direct various mobile phases of different composition, passed through the stationary phase via the mobile phase switch into at least one container,
- and the controlling system is adapted to determine the composition of the new mobile phase in the at least one container by using data received from the mobile phase supply system and the detector.

In this case, the chromatographic system of the invention is adapted to determine the composition of the mobile phase passed through the stationary phase and direct mobile phases of different composition having no or only minor contaminations after passing the stationary phase into at least one container. For example mobile phases without impurities varying from 70% acetonitrile:30% water to 90% acetonitrile:10% water are collected in a container, resulting in a new mobile phase with a different composition. Furthermore the controlling system is adapted to allow the calculation of the thus formed new composition of the new mobile phase. The controlling system receives data from the detector and the mobile phase supply system about the mobile phase flow rate, the composition of the mobile phase at the beginning of the gradient, the composition of the mobile phase at the end of the gradient, the purity of the mobile phase, the steepness(es) of the gradient(s) and its (their) duration and occurrence of the mobile phase at the detector. The controlling system can use all these data in order to determine the composition and the purity of the new mobile phase in the container. In the case, that two or even more gradients are run during one chromatographic procedure, the mobile phases of each gradient passed through the stationary phase might be collected into one container, the container being different each time, so that two or even more mobile phases with new composition might be generated by the chromatographic system of the invention.

Preferably an electronic microprocessor for direct data communication between the mobile phase supply system and the detector is part of the system. The electronic microprocessor might be part of at least the mobile phase supply system or the detector or both. Such a microprocessor can enable a direct and easy communication between the mobile phase supply system and the detector as, for example, shown in Figure 3. The communication between the mobile phase supply system and the detector via their microprocessors might also involve local area network systems, for example, a communication local area network (CAN).

A further subject of the invention is a method of operating a chromatographic system, the system including a mobile phase supply system for delivering a mobile phase, a stationary phase, a detector and a mobile phase switch able to direct the flow of a mobile phase to different locations all being connected via a mobile phase flow line comprising the following subsequent steps:
A) Applying an initial mobile phase onto the stationary phase using the mobile phase supply system,
B) Automatically determining the composition of the mobile phase passing the stationary phase, using data received from the detector and the mobile phase supply system,
C) Automatically directing the mobile phase passed through the stationary phase into a container depending on the data received in step B) using the mobile phase switch.

Such an operating method allows automatic direction of the mobile phase to different locations depending on their composition and the presence or absence of analytes or impurities.

Preferably at least one of the following data of the mobile phase having passed the stationary phase and if present compounds eluted from the stationary phase is received from the detector:

Its current refractive index, UV spectrum, florescence spectrum, TIC mass spectrum, or light scattering capability at a particular time when passing the detector.

Furthermore in step B) at least one of the following data is received from the mobile phase supply system:
- flow rate of the mobile phase applied onto the stationary phase, composition of this mobile phase, duration of delivery of this mobile phase at a particular composition and thus the mobile phase gradient steepness.

These data received from the detector and the mobile phase supply system enable an automated determination of the composition of the mobile phase and its purity after having passed the stationary phase in a very simple manner.

Advantageously in step A) of the method of the invention at least two different initial eluents are mixed together in a timely variable manner resulting in a mobile phase for application onto the stationary phase, running a linear gradient elution and/or a step gradient elution. In this variant of the method of the invention in step B) the composition of the mobile phase is determined using additional data received from the mobile phase supply system. Preferably at least one of the following additional data is received from the mobile phase supply system:
- composition of the mobile phase at the beginning of the gradient, composition of the mobile phase at the end of the gradient and duration of the gradient.

Such a variant of the method of the invention enables an automatic determination of the composition of the mobile phases passed through the stationary phase during gradient elution and/or step gradient elution procedures.

It is also possible to recycle a mobile phase having a constant composition during an isocratic chromatographic run.

Preferably in an additional step C) mobile phases of different composition are automatically directed into at least one container, resulting in a new mobile phase, wherein in an additional step D) the composition of this new mobile phase is automatically determined using data received in step B) from the mobile phase supply system and the detector.

This variant of the method of the invention allows the generation of freshly adjusted mobile phases by mixing mobile phases of different composition passed through the stationary phase to a completely new composition and thus allows an enhanced and simplified mobile phase recycling. Using this method, it is also possible to recycle mobile phases with defined lower contamination than used during the gradient elution prior to use. A chromatographic system which is able to be operated using such a method is shown in Figure 3. This operating method of the invention allows the recycling of used mobile phases with variant compositions in one container, so that a new mobile phase is generated with a new composition, which can automatically be determined by the system.

Preferably at least one container for storage of the mobile phase is used. In this case it is possible to automatically direct in step C) the mobile phase passed through the stationary phase with the same composition as the mobile phase applied onto the stationary phase into the at least one container. This method of the invention allows the direct recycling of mobile phases without major impurities back into the storage container, which is connected to the mobile phase switch via a mobile phase flow line (see e.g. Fig.1). This method of the invention enables an immediate reuse of the recycled mobile phases because the container can also be connected to the mobile phase supply system.

In a further variant of the method of the invention the delay time of the mobile phase between the mobile phase supply system in the case of an isocratic run or the mobile phase mixer in the case of a gradient run and the mobile phase switch is automatically determined by using at least one of the following data:
- refractive index, UV spectrum, florescence spectrum, TIC mass spectrum, light scattering received from the detector for determination of the composition change of the mobile phase at a particular time of the mobile phase in the detector, and
- information about the mobile phase flow rate received from the mobile phase supply system and
- the physical volume of the mobile phase flow line connecting the detector and the mobile phase switch.

This variant of the method of the invention allows the determination of the delay volume and therefore the delay time of a mobile phase between the mobile phase supply system and the mobile phase switch. The delay time or delay volume between the mobile phase supply system and the mobile phase switch is basically composed of two different delay volumes. The first one is the delay volume between the mobile phase supply system or the mixer and the detector and the second one is the delay volume between the detector and the mobile phase switch (see for example Figure 1). The delay volume between the mobile phase supply system and the detector can be determined by using data about the mobile phase flow rate and the composition of the mobile phase delivered from the mobile phase supply system and the data received from the detector indicating the composition of the mobile having passed the stationary phase and the time of occurrence of the mobile phase at the detector. The delay volume between the detector and the mobile phase switch can be determined by using information about the physical volume of the mobile phase flow line connecting the detector and the mobile phase switch and information about the mobile phase flow rate.

In the following the invention will be explained in more detail by the figures and embodiments. All figures are just simplified schematic representations presented for illustration purposes only.

### BRIEF DESCRIPTION OF THE DRAWINGS

Figure 1 shows one variant of the chromatographic system of the invention with a special embodiment of the controlling system.
Figure 2 shows another embodiment of the chromatographic system of the invention for isocratic chromatographic runs.
Figure 3 depicts a chromatographic system of the invention able to run a gradient elution.
Figure 4 shows a chromatogram.

### DETAILED DESCRIPTION OF EMBODIMENTS OF THE INVENTION

Figure 1 depicts a schematic representation of a chromatographic system 1 of the invention able to run a gradient elution. Solid lines in Figure 1 and all the other figures represent the mobile phase flow line 10, whereas dashed lines represent data communication lines 40. The chromatographic system comprises a mobile phase supply system 20, which in this case is a pump with a mobile phase mixer 45, a stationary phase 5, for example a column, a detector 15 and a mobile phase switch 25 which are all in flow communication through a flow line 10. The pump 20 is connected via the mobile phase flow line 10 to two containers 2A and 2B each container having a different eluent (e.g. water and acetonitrile). The pump 20 is adapted to deliver the mobile phase via the mobile phase flow line 10 onto the stationary phase 5 and is also able to combine the different eluents in the containers 2A and 2B in order to generate a gradient. The gradient mixer 45 can mix the already combined eluents completely thereby avoiding concentration differences in the mobile phase. After having passed the stationary phase 5, the mobile phase can flow through the detector 15 and the mobile phase switch 25. The chromatographic system also comprises a controlling system 30 which comprises a microprocessor 30A in data communication with a data processor 30B, which can process the data that are received from the controlling system. The microprocessor is in data communication with the pump 20 and with the detector 15. D/A converters 30D and A/D converters 30E are present in between the data communication lines between the microprocessor 30A and the pump 20 and between the microprocessor 30A and the detector 15. The microprocessor 30A receives data from the pump 20, for example, information about the composition of the mobile phase driven into the chromatographic system, the time of first supply of the mobile phase and the mobile phase flow rate. On the other hand the microprocessor also receives data from the detector 15, for example information about the composition of the mobile phase detected at the detector at a particular time. The detector might comprise an UV or IR detector, a mass spectrometer or an apparatus for determination of the refractive index or any kind of combination thereof.

The microprocessor 30A is adapted to process the data received from the detector 15 and the pump 20 using the data processor 30B. The microprocessor 30A can send controlling signals to the detector 15 and the pump 20 and may also be adapted to control the mobile phase switch 25 via the mobile phase switch driver 30C. The reference numeral 100 represents the delay volume between the pump 20 and the detector 15. Reference numeral 110 depicts the delay volume between the detector 15 and the mobile phase switch 25.

During a chromatographic run compounds including samples to be analyzed can be injected via a sample injector 12 into the mobile phase, that is pumped by pump 20 through the mobile phase line 10 .

On its way through the mobile phase line 10, the injected sample enters for example an HPLC column tube 15, completely filled with stationary phase. The injected compounds can then interact with the stationary phase resulting in different duration times.

These compounds can be eluted via the mobile phase using the pump 20 through the stationary phase and into the detector 15. The detector 15 as well as the pump 20 send data to the microprocessor 30A for further processing and analysis. The microprocessor 30A is then adapted to control the mobile phase switch 25 via the mobile phase switch driver 30C thereby changing the direction of flow into different locations. If the information received by the pump 20 and detector 15 indicates that pure initial mobile phase having passed through the stationary phase has reached the mobile phase switch 25, the controlling system redirects the mobile phase via the mobile phase switch 25 back into its respective container 2A or 2B where it came from.

In the case, that the data received by the detector 15 and the pump 20 indicate that a mobile phase contaminated by impurities has passed the stationary phase 5, the controlling system can direct this mobile phase into the waste container 26. Compounds of interest that are eluted from the stationary phase can be directed for example into a fraction collector 27 for further action.

Figure 2 shows another embodiment of the chromatographic system of the invention for isocratic runs, using just one premixed mobile phase in a container 2. In comparison to the chromatographic system shown in figure 1 a computer system 90 in data communication with the controlling system 30 is part of the chromatographic system. The computer system 90 enables a manual user input for control of the chromatographic system of the invention and furthermore allows monitoring the chromatographic run. Additionally microprocessors 20A and 15A are part of the pump 20 and the detector 15. These microprocessors can simplify the data connection and processing between both components and the controlling system 30.

Figure 3 shows another variant of the chromatographic system of the invention suitable to run gradient elution procedures. In this chromatographic system, the gradient mixer 45 can combine and mix the two eluents originating from the containers 2A and 2B. The gradient mixer 45 might be a part of the pump 20 or might be a separate component of the chromatographic system.

The gradient mixer 45 is in data flow communication with the two storage containers 2A and 2B containing different eluents A and B for mixing a mobile phase. Again a computer system 90 is part of the chromatographic system. The mobile phase switch 25 additionally comprises a detection system for a test compound, which might be a photodiode 25A. As mentioned above this detection system is also in data communication with the control system 30 and allows the exact determination of the delay volume between the detector 15 and the mobile phase switch 25. For the determination of this delay volume, the stationary phase 5 has to be replaced with a mobile phase flow line 10, because the test compound tends to interact with the stationary phase. The mobile phase switch 25 that for example, comprises a valve can be controlled by the controlling system 30. Depending on the information, received by the control system 30 the mobile phase switch 25 can direct the flow of the mobile phase into a waste container 26A or into a fraction collector 27. Since the data controlling system 30 is able to determine the composition and purity of mobile phases having passed the stationary phase 5 at any time, the control system can also direct the flow of mobile phases of different compositions into a container 26B. This results in the above-mentioned new mobile phase, the composition of which can be determined by the controlling system 30 using data received from the detector 15 and the pump 20. Additionally the microprocessors 20A and 15A, which are part of the pump 20 and the detector 15 can also establish a direct data communication and processing between these components as indicated by the dashed line.

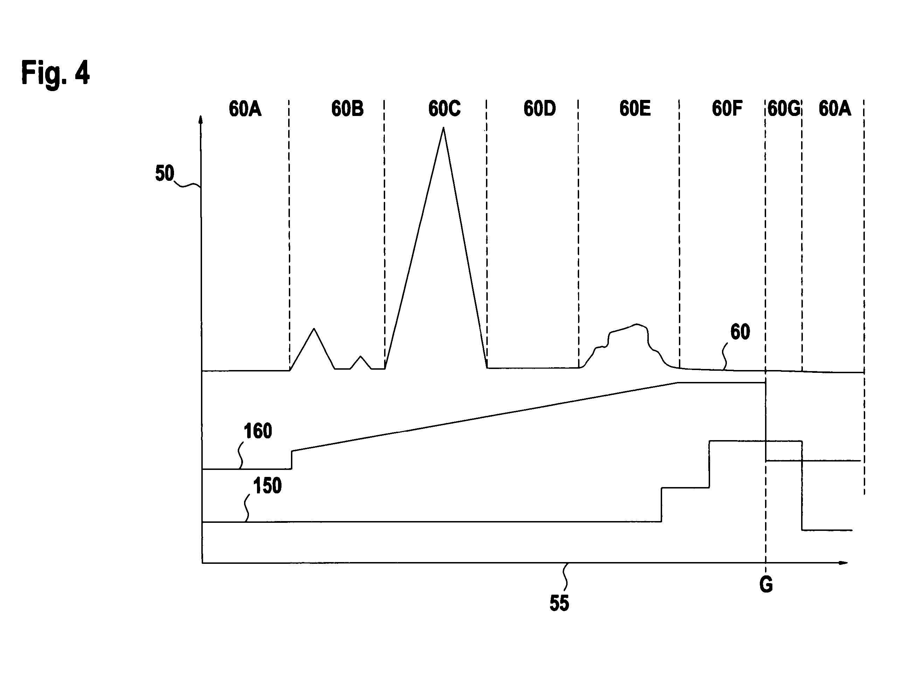

Figure 4 shows a chromatogram recorded by the detector 15. When the detector 15 is a diode array-based detector, comprising a plurality of different diodes, signals at different wavelengths can be detected at the same time. The ordinate 50 denotes the absorption, for example the UV absorption of the mobile phase at a certain, predefined wavelength, and - if present - compounds in the mobile phase, indicated by line 60, the so-called baseline.

The abscissa 55 indicates the time course of the chromatographic run. The line 150 shows the flow rate and the line 160 the mobile phase composition profile at a certain time and UV absorption at a set wavelength during the chromatographic run. The chromatogram shows the changing mobile phase composition at a predefined wavelength, caused by the presence of an injected sample mix into the sample injector 12, the result of the separation power of the separation device 5 and the gradient composition of eluent A and eluent B, preformed by the mixer 45.

For example, at the beginning of the chromatogram pure eluent A or a defined composition of eluent A and B is detected by the detector, whereas at the end of the chromatographic run indicated by G, pure eluent B or a defined composition identical or different to the beginning composition might be detected.

In the chromatogram shown in Figure 4 the area denoted as 60A consists of pure eluent A which can easily be directed back into the container for eluent A when a chromatographic system of the invention, for example as shown in Figure 3, is used (container 2A for eluent A). The area of the chromatogram denoted as 60B contains analytes being eluted from the stationary phase, which may become directed into the waste container in case of being of no interest or they may become directed into the fraction collector 27.

The area 60C denotes a peak in the chromatogram. This peak indicates, that at least one compound of interest becomes eluted from the stationary phase while the concentration of eluent B relative to eluent A is increased in the gradient as shown in line 160.

This area 60C can automatically be directed to a fraction collector 27 using a chromatographic system of the invention. The area 60D contains a pure mixture of well known composition between eluent A and eluent B and can therefore automatically be directed to a third storage container for reuse (for example container 26B in Figure 3). The peak in the area 60E indicates impurities eluted from the stationary phase while the concentration of eluent B is further increased. These impurities can also be directed automatically into the waste (for example container 26A in Figure 3). The area 60F contains pure eluent B which can be directed back into the original container (e.g. container 2B for solvent B in Figure 3). Area 60G contains a mixture of eluent B and the original starting condition identical to area 60A (eluent A), while equilibrating the column with the original starting condition. This area 60G might be directed into the waste.

Area 60A again contains pure eluent A which is applied onto the stationary phase for preparation of the next chromatographic run. The solvent in this area 60A can be directed back into the container 2A shown in Figure 3 for eluent A. The flow rate 150 might be held constant, while eluting the components of interest from the stationary phase. Afterwards the flow rate might be increased as shown in Fig. 4 in order to accelerate the equilibration of the stationary with the original starting conditions.

The scope of the invention is not limited to the embodiments shown in the figures. Indeed variations of the chromatographic system including any kind of combination of the different features shown in the figures are also possible. Further variations are possible concerning the numbers of storage containers and fraction collectors, which are connected to the mobile phase switch. Moreover, the controlling system might be part of the detector, the pump, the mobile phase switch, or might be a separate component of the chromatographic system of the invention.

## Claims

1. A chromatographic system (1) comprising:
- a stationary phase (5),
- a mobile phase flow line (10) providing a flow path for a mobile phase,
- a detector (15) capable of detecting the composition of a mobile phase passed through the stationary phase and capable of detecting the presence of components eluted from the stationary phase,
- a mobile phase supply system (20) for delivering the mobile phase to the mobile phase flow line,
- a mobile phase switch (25) adapted to direct the flow of mobile phase to different locations,
- the mobile phase supply system (20), the stationary phase (5), the detector (15) and the mobile phase switch (25) being connected via the mobile phase line (10), wherein the detector (15) and the mobile phase switch (25) are located downwards in the direction of flow relative to the stationary phase (5),
- a controlling system (30) being in data communication with the detector (15) and the mobile phase supply system (20), adapted to control the mobile phase supply system (20)
- wherein the controlling system (30) is adapted to control the mobile phase switch (25) according to data received from the detector (15) and the mobile phase supply system (20).

2. Chromatographic system according to claim 1,
- wherein the mobile phase supply system (20) includes a pump, which is controlled by the controlling system.

3. Chromatographic system according to claim 1 or any of the claims 2 or 3,
- wherein the mobile phase switch (25) comprises a valve .

4. Chromatographic system according to claim 1 or any of the claims 2 to 3,
- wherein the detector (15) and the mobile phase supply system (20) include microprocessors (15A, 20A) for communication with the controlling system (30).

5. Chromatographic system according to claim 1 or any of the claims 2 to 4,
- wherein the mobile phase flow line (10) comprises at least one of the following components:
- tubes, capillaries, sample injector.

6. Chromatographic system with mobile phase recycling ability according to claim 1 or any of the claims 2 to 5,
- wherein the detector comprises a diode array based UV detector capable of storing spectra of the mobile phase and of components eluted from the stationary phase,
- wherein at least one storage container for the mobile phase is connected to the mobile phase flow line,
- wherein the controlling system is adapted to redirect the flow of mobile phase passed through the stationary phase to the storage container.

7. Chromatographic system according to claim 1 or any of the claims 2 to 6,
- wherein the controlling system is adapted to combine data of the composition of the mobile phase before entering the stationary phase with data of the mobile phase leaving the stationary phase.

8. Chromatographic system according to claim 1 or any of the claims 2 to 7,
- wherein the mobile phase supply system provides data about the mobile phase flow rate and composition and the detector provides at least one or a combination of the following data:
- change in refractive index, UV absorption, fluorescence intensity, mass/charge ratio m/z , light scattering intensity at a specific time during a run.

9. Chromatographic system according to claim 1 or any of the claims 2 to 8,
- wherein the mobile phase flow rate generated by the mobile phase supply system is variably adjustable by the controlling system according to data received from the detector.

10. Chromatographic system according to claim 1 or any of the claims 2 to 9,
- wherein the controlling system comprises a computer-system connected to the controlling system.

11. Chromatographic system according to claim 1 or any of the claims 2 to 10,
- wherein the mobile phase switch comprises a second detector for a test compound,
- wherein the mobile phase switch provides data about the test compound to the controlling system.

12. Chromatographic system according to claim 1 or any of the claims 2 to 11,
- wherein a mobile phase mixer is part of the system,
- wherein the controlling system is adapted to control the mobile phase mixer, thereby enabling the mixing of at least two eluents to a mobile phase enabling a gradient and/or step gradient elution.

13. Chromatographic system according to claim 1 or any of the claims 2 to 12,
- wherein the controlling system is adapted to direct various mobile phases of different composition, leaving the stationary phase via the mobile phase switch into at least one container, resulting in a new mobile phase of new composition,
- wherein the controlling system is adapted to determine the purity and composition of the new mobile phase by using data received from the mobile phase supply system and the detector.

14. Chromatographic system according to claim 1 or any of the claims 2 to 13,
- wherein the mobile phase supply system and the detector provide the following data:
- mobile phase flow rate, the composition of the mobile phase at the beginning of the gradient, the composition of the mobile phase at the end of the gradient, the purity of the mobile phase, the steepness(es) of the gradient(s) and its (their) duration and occurrence of the mobile phase at the detector.

15. Chromatographic system according to claim 1 or any of the claims 2 to 14,
- wherein an electronic microprocessor for direct data communication between the mobile phase supply system and the detector is part of the system,
- wherein the electronic microprocessor is part of at least the mobile phase supply system or the detector.

16. A method of operating a chromatographic system, the system including a mobile phase supply system for delivering a mobile phase, a stationary phase, a sample injector, a detector and a mobile phase switch able to direct the flow of a mobile phase to different locations, all being connected via a mobile phase flow line, comprising the following subsequent steps:
A) applying an initial mobile phase onto the stationary phase using the mobile phase supply system,
B) automatically determining the composition and purity of the mobile phase passing the stationary phase using data received from the detector and data received from the mobile phase supply system,
C) automatically directing the mobile phase passed through the stationary phase into a container depending on the data received in step B) using the mobile phase switch.

17. Method according to the previous claim,
- wherein in step B) at least one of the following data of the mobile phase is received from the detector:
- refractive index, UV spectrum, fluorescence spectrum, TIC spectrum, light scattering information,
- wherein in step B) alt least one of the following data is received from the mobile phase supply system:
- mobile phase flow rate, mobile phase composition and duration of delivery of the mobile phase.

18. Method according to claim 16 or 17,
- wherein in step A) at least two different eluents are mixed together in a variable manner resulting in an initial mobile phase for application onto the stationary phase, running a gradient elution and/or a step gradient elution,
- wherein in step B) the composition of the mobile phase, passed through the stationary phase is determined using additional data received from the mobile phase supply system.

19. Method according to the previous claim,
- wherein mobile phase supply system submits at least one of the following additional data :
- composition of the mobile phase at the beginning of the gradient, composition of the mobile phase at the end of the gradient and duration of the gradient.

20. Method according to claim 18 or claim 19,
- wherein in step C) mobile phases of different composition are automatically directed into at least one container, resulting in a new mobile phase,
- wherein in a step D) the composition of the new mobile phase is automatically determined by using data received in step B) from the mobile phase supply system and the detector.

21. Method according to claim 16 or claim 17,
- wherein at least one container is used for storage of the initial mobile phase,
- wherein in step C) the mobile phase with the same composition as the initial mobile phase is automatically directed back into the at least one container.

22. Method according to claim 16 or any of the claims 17 to 21,
- wherein in a step E) the delay time of the mobile phase between the mobile phase supply system and the mobile phase switch is automatically determined by using at least one the following data:
- refractive index, UV spectrum, fluorescence spectrum, mass spectrum, light scattering information,
- mobile phase flow rate received from the mobile phase supply system, composition of the mobile phase delivered by the mobile phase supply system and
- volume of the mobile phase flow line connecting the detector and the mobile phase switch.

23. Method according to claim 16 or any of the claims ,
- wherein in step C) mobile phases having no impurities are automatically directed into storage containers for recycling and mobile phase containing analytes of interest are automatically directed to a fraction collector.

## Amended claims

### Amended claims in accordance with Rule 86(2) EPC.

**1.** A chromatographic system (1) comprising:
- a stationary phase (5),
- a mobile phase flow line (10) providing a flow path for a mobile phase,
- a detector (15) capable of detecting the composition of a mobile phase passed through the stationary phase and capable of detecting the presence of components eluted from the stationary phase,
- a mobile phase supply system (20) for delivering the mobile phase to the mobile phase flow line,
- a mobile phase switch (25) adapted to direct the flow of mobile phase to different locations,
- the mobile phase supply system (20), the stationary phase (5), the detector (15) and the mobile phase switch (25) being connected via the mobile phase line (10), wherein the detector (15) and the mobile phase switch (25) are located downwards in the direction of flow relative to the stationary phase (5), and
- a controlling system (30) being in data communication with the detector (15) and the mobile phase supply system (20), adapted to control the mobile phase supply system (20),
- wherein the controlling system (30) is adapted to control the mobile phase switch (25) according to data received from the detector (15) and the mobile phase supply system (20),
- wherein the controlling system is adapted to direct various mobile phases of different composition, after leaving the stationary phase, via the mobile phase switch into at least one container, resulting in a new mobile phase of new composition, and
- wherein the controlling system is adapted to determine the purity and composition of the new mobile phase by using data received from the mobile phase supply system and the detector.

**2.** Chromatographic system according to claim 1,
- wherein the mobile phase supply system (20) includes a pump, which is controlled by the controlling system.

**3.** Chromatographic system according to claim 1 or any of the above claims,
- wherein the mobile phase switch (25) comprises a valve.

**4.** Chromatographic system according to claim 1 or any of the above claims,
- wherein the detector (15) and the mobile phase supply system (20) include microprocessors (15A, 20A) for communication with the controlling system (30).

**5.** Chromatographic system according to claim 1 or any of the above claims,
- wherein the mobile phase flow line (10) comprises at least one of the following components:
- tubes, capillaries, sample injector.

**6.** Chromatographic system according to claim 1 or any of the above claims,
- wherein the detector comprises a diode array based UV detector capable of storing spectra of the mobile phase and of components eluted from the stationary phase,
- wherein at least one storage container for the mobile phase is connected to the mobile phase flow line,
- wherein the controlling system is adapted to redirect the flow of mobile phase passed through the stationary phase to the storage container.

**7.** Chromatographic system according to claim 1 or any of the above claims,
- wherein the controlling system is adapted to combine data of the composition of the mobile phase before entering the stationary phase with data of the mobile phase leaving the stationary phase.

**8.** Chromatographic system according to claim 1 or any of the above claims,
- wherein the mobile phase supply system provides data about the mobile phase flow rate and composition and the detector provides at least one or a combination of the following data:
- change in refractive index, UV absorption, fluorescence intensity, mass/charge ratio m/z , light scattering intensity at a specific time during a run.

**9.** Chromatographic system according to claim 1 or any of the above claims,
- wherein the mobile phase flow rate generated by the mobile phase supply system is variably adjustable by the controlling system according to data received from the detector.

**10.** Chromatographic system according to claim 1 or any of the above claims,
- wherein the controlling system comprises a computer-system connected to the controlling system.

**11.** Chromatographic system according to claim 1 or any of the above claims,
- wherein the mobile phase switch comprises a second detector for a test compound,
- wherein the mobile phase switch provides data about the test compound to the controlling system.

**12.** Chromatographic system according to claim 1 or any of the above claims,
- wherein a mobile phase mixer is part of the system,
- wherein the controlling system is adapted to control the mobile phase mixer, thereby enabling the mixing of at least two eluents to a mobile phase enabling a gradient and/or step gradient elution.

**13.** Chromatographic system according to claim 1 or any of the above claims,
- wherein the mobile phase supply system and the detector provide the following data:
- mobile phase flow rate, the composition of the mobile phase at the beginning of the gradient, the composition of the mobile phase at the end of the gradient, the purity of the mobile phase, the steepness(es) of the gradient(s) and its (their) duration and occurrence of the mobile phase at the detector.

**14.** Chromatographic system according to claim 1 or any of the above claims,
- wherein an electronic microprocessor for direct data communication between the mobile phase supply system and the detector is part of the system,
- wherein the electronic microprocessor is part of at least the mobile phase supply system or the detector.

**15.** A method of operating a chromatographic system, the system including a mobile phase supply system for delivering a mobile phase, a stationary phase, a sample injector, a detector and a mobile phase switch able to direct the flow of a mobile phase to different locations, all being connected via a mobile phase flow line, the method comprising the following steps:
A) applying an initial mobile phase onto the stationary phase using the mobile phase supply system, wherein at least two different eluents are mixed together in a variable manner resulting in the initial mobile phase for application onto the stationary phase, running a gradient elution and/or a step gradient elution,
B) determining the composition and purity of the mobile phase after passing the stationary phase by using data received from the detector and data received from the mobile phase supply system,
C) directing the mobile phase passed through the stationary phase into a container depending on the data received in step B) by using the mobile phase switch, wherein the mobile phases of different composition are directed into at least one container resulting in a new mobile phase
D) determining the composition of the new mobile phase by using data received in step B).

**16.** Method according to the previous claim,
- wherein in step B) at least one of the following data of the mobile phase is received from the detector:
- refractive index, UV spectrum, fluorescence spectrum, TIC spectrum, light scattering information,
- wherein in step B) alt least one of the following data is received from the mobile phase supply system:
- mobile phase flow rate, mobile phase composition and duration of delivery of the mobile phase.

**17.** Method of claim 15 or any one of the above claims,
- wherein mobile phase supply system submits at least one of the following additional data :
- composition of the mobile phase at the beginning of the gradient, composition of the mobile phase at the end of the gradient and duration of the gradient.

**18.** Method of claim 15 or any one of the above claims,
- wherein at least one container is used for storage of the initial mobile phase,
- wherein in step C) the mobile phase with the same composition as the initial mobile phase is automatically directed back into the at least one container.

**19.** Method according to claim 15 or any of the above claims,
- wherein in a step E) the delay time of the mobile phase between the mobile phase supply system and the mobile phase switch is automatically determined by using at least one the following data:
- refractive index, UV spectrum, fluorescence spectrum, mass spectrum, light scattering information,
- mobile phase flow rate received from the mobile phase supply system, composition of the mobile phase delivered by the mobile phase supply system and
- volume of the mobile phase flow line connecting the detector and the mobile phase switch.

**20.** Method according to claim 15 or any one of the above claims,
- wherein in step C) mobile phases having no impurities are automatically directed into storage containers for recycling and mobile phase containing analytes of interest are automatically directed to a fraction collector.
